# EUROPEAN PATENT APPLICATION

(11) **EP 3 858 139 A1**
(43) Date of publication of application: **04.08.2021**
(21) Application number: 20866928.3
(22) Date of filing: 25.05.2020
(51) Int. Cl.: A01N 43/10, A01N 33/24, A01N 37/10, A01N 43/00, A01N 43/08, A01N 43/38, A01N 55/00, A01P 21/00

(54) **COMPOSITION FOR ENHANCING RESISTANCE TO DROUGHT AND OSMOTIC STRESS, AND USES THEREOF**

(30) Priority: 04.12.2019 KR 20190159583
(71) Applicant: Republic of Korea Management: Rural Development Administration, Deokjin-gu Jeonju-si, Jeollabuk-do 54875 (KR)
(72) Inventor: KIM, Beom-Gi, Wanju-gun Jeollabuk-do 55365 (KR); LIM, Sung-Hyung, Jeonju-si Jeollabuk-do 54864 (KR); LEE, Jong-Yeol, Jeonju-si Jeollabuk-do 55147 (KR); KIM, Ri-Gyoeng, Wanju-gun Jeollabuk-do 55365 (KR); MIN, Myung-Ki, Seoul 02436 (KR)
(74) Representative: Isarpatent
(86) International application number: PCT/KR2020/006758
(87) International publication number: WO 2021/112352

(57) **Abstract**

Disclosed is a composition for improving resistance to drought and osmotic stress containing a compound represented by Formula 1 as an active ingredient. The composition containing the compound represented by Formula 1 can minimize inhibition of the growth of crops while improving resistance to drought and osmotic stress. Therefore, the composition is expected to be useful as a crop physiology regulator.

## Description

### [Technical Field]

The present invention relates to a composition for improving resistance to drought and osmotic stress, and to a method for improving resistance to drought and osmotic stress of plants using the composition.

### [Background Art]

Higher plants are immobile and thus face a variety of environmental factors including environmental stresses such as drought, high salt, heavy metals, cold damage, high temperatures and ozone during their lifetime. Such an abiotic environmental stress, which is a factor limiting the growth and development of crops, is found to cause a great loss of more than half of all possible production. Moreover, as rapid local environmental changes have been recorded in recent years, the degree of damage to crops is becoming an issue of greater concern.

Among these abiotic stresses, lack of moisture is the most serious environmental factor considered to cause major crop production decline. Water consumption for crop production around the world continues to increase, and intermittent or prolonged drought has a major impact on the yield of food crops. Plants perform a variety of defense strategies to respond to water shortages, including drought awareness, production and propagation of signal transporters, signaling by direct recognition and via transporters, and inducing the expression of drought stress response genes. Cellular or genetic defense mechanisms against water stress are widely known (Non-Patent Document 1). However, there is still a lack of knowledge about the biological functions of stress-related genes involved in resistance or sensitivity to stress in higher plants.

Therefore, in order to increase the productivity of crops, it is important to study the functions of novel compounds that induce stress-related genes or stress responses involved in resistance or sensitivity to stress.

Against this background, in order to find a novel compound that is involved in promoting drought and osmotic stress resistance, the present inventors selected 90 compounds having a structure similar to ABA, a plant environmental stress-resistant hormone deposited with the Korea Chemical Bank, and then obtained the same. In addition, the present invention was completed by selecting compound S17, which induces some reactions similar to ABA using rice protoplasts and environmental stress response reporter systems, and identifying the effects of the compound S17 on plant physiology and the functions of improving drought and osmotic stress resistance thereof.

### [Disclosure]

### [Technical Problem]

Accordingly, it is one object of the present invention to provide a composition for improving resistance to drought and osmotic stress and a method for improving resistance to drought and osmotic stress in plants using the composition.

### [Technical Solution]

In accordance with the present invention, the above and other objects can be accomplished by the provision of a composition for improving resistance to drought and osmotic stress containing a compound represented by the following Formula 1 as an active ingredient:

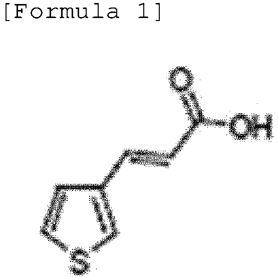

In accordance with another aspect of the present invention, provided is a method for improving resistance to drought and osmotic stress including treating a plant with the composition for improving resistance to drought and osmotic stress.

### [Advantageous Effects]

The composition containing the compound (S17) represented by Formula 1 according to the present invention can minimize the inhibition of growth of crops while improving resistance to drought and osmotic stress. Therefore, the composition according to the present invention is expected to be useful as a crop physiology regulator.

### [Brief Description of Drawings]

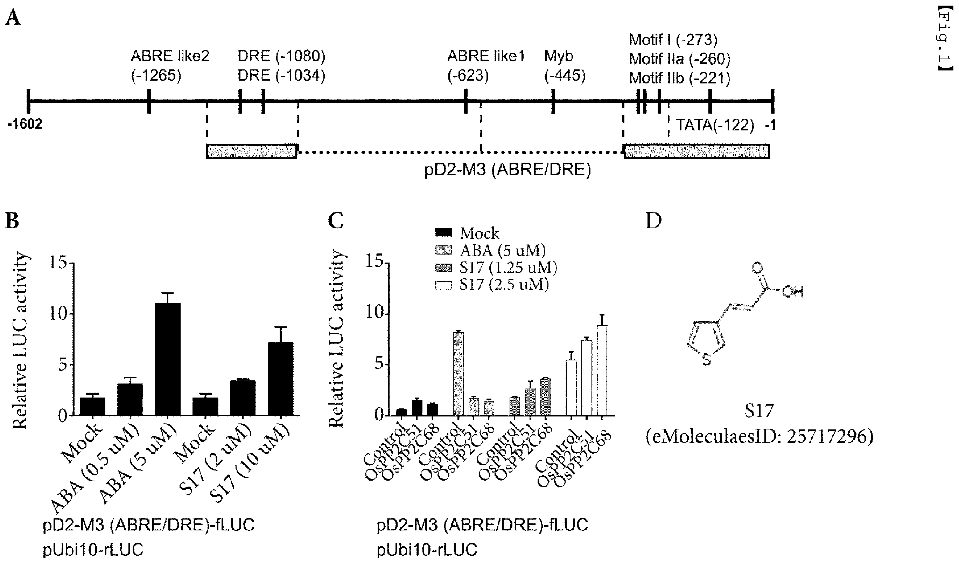

FIG. 1 shows a result of verification of induction of environmental stress response by a compound using a rice protoplast system, wherein (A) is a schematic diagram illustrating a pD2-M3 promoter, (B) shows the result of identification of fLUC expression by treatment with the compound, (C) shows the result of a determination as to whether or not an ABA signaling system is used, and (D) shows an S17 compound structure.

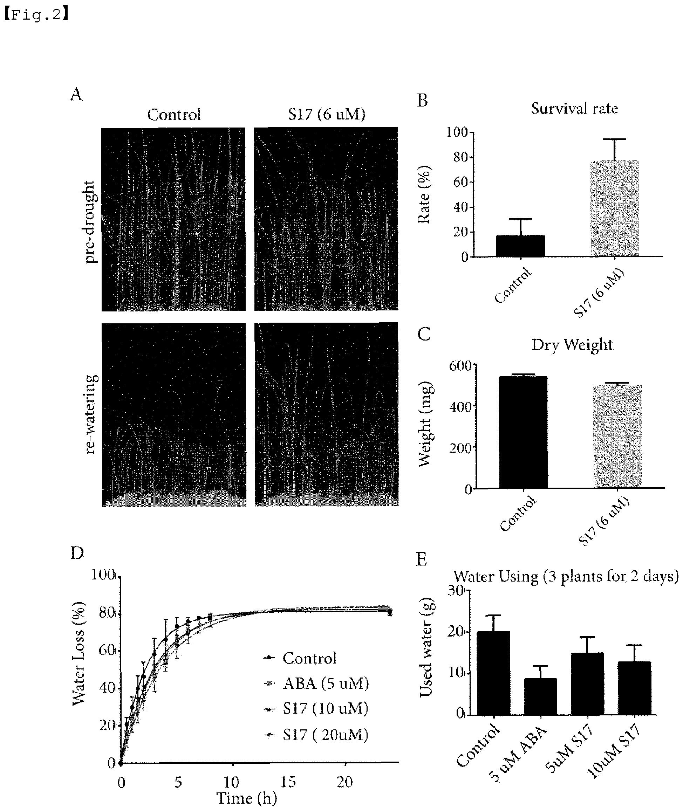

FIG. 2 shows the result of an experiment to determine induction of drought resistance improvement by the S17 compound, wherein (A) shows a drying experiment on S17-treated rice, (B) shows the survival rate in the drying experiment, (C) shows the dry weight after the drying experiment, (D) shows the result of measurement of water loss in a compound-treated rice leaf, and (E) shows water consumption of the compound-treated rice leaf.

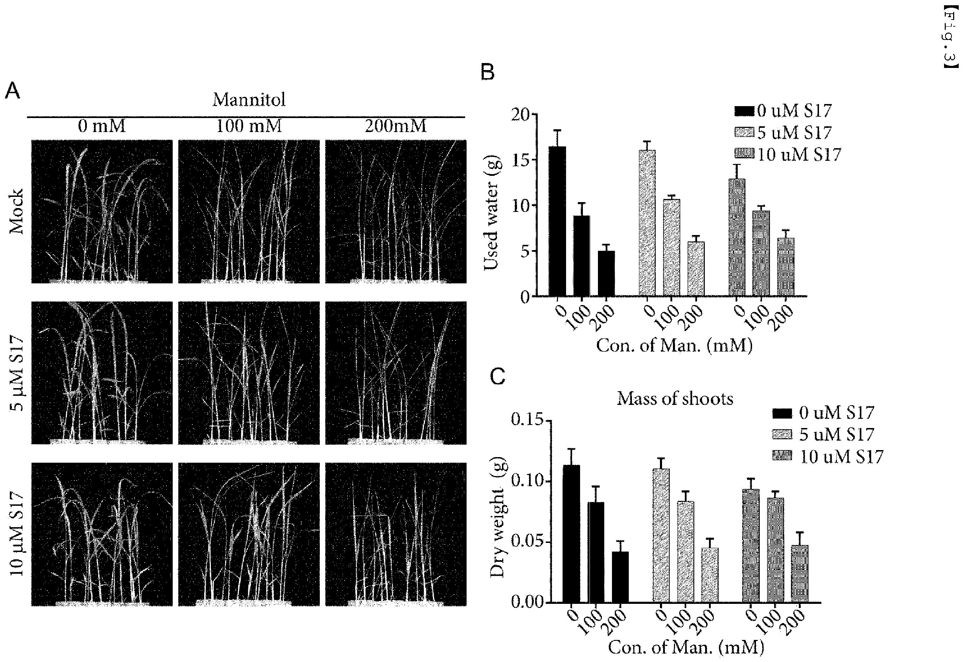

FIG. 3 shows a result of verification of osmotic stress resistance induction by S17, wherein (A) shows osmotic-stress-treated rice, (B) shows water consumption, and (C) shows dry weight after the experiment.

### [Best Mode]

The present invention provides a composition for improving resistance to drought and osmotic stress containing a compound represented by the following Formula 1 as an active ingredient:

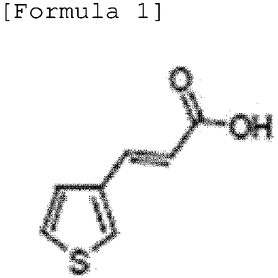

### [Mode for Invention]

In the present invention, the compound represented by Formula 1 may be referred to as "compound of Formula 1" or "S17".

The terms "drought resistance (drought restiveness)" and "osmotic stress resistance" refer to the capability of a plant to withstand dehydration, and indicate the degree to which the plant can withstand dry or drought conditions.

In the prior art, drought resistance of plants was improved by developing crops with improved drought resistance through genetic engineering relating to drought stress, or by treating plants with the environmental stress resistance hormone ABA (abscisic acid). In particular, ABA is a compound that affects the improvement of drought resistance in various ways, and the compound is known to be highly effective in improving drought resistance, but to negatively affect the growth of plants.

Accordingly, the present inventors selected a compound that induces some reactions similar to ABA, that is, the compound of Formula 1, from among compounds having a structure similar to ABA using a rice protoplast and an environmental stress response reporter system.

The composition containing the compound of Formula 1 according to the present invention has an excellent effect of improving resistance to drought and osmotic stress.

The concentration of the compound of Formula 1 in the composition may be 1 to 1000 µM, specifically 1 to 500 µM, and more specifically 1 to 50 µM, or 1 to 5 µM. The effect of improving resistance to drought and osmotic stress is excellent within the above range. When the concentration is less than 1 µM, the effect of enhancing drought and osmotic stress resistance is unsatisfactory, and when the concentration exceeds 1000 µM, the increase in the effect of enhancing drought and osmotic stress resistance is insignificant. Thus, preferably, the concentration is within the range from 1 to 1000 µM.

In one embodiment of the present invention, OsPP2C51 or OsPP2C68 gene, a dephosphorylation enzyme that inhibits ABA signaling, and reporter transporters (pABRE-DRE::fLUC, pUbi10::rLUC) are simultaneously transiently expressed in rice protoplasts, and are then treated with ABA and S17 compounds, and the expression of the reporter is identified (FIG. 1C). In addition, an experimental group, in which rice grown in a nutrient solution for 14 days is treated with S17, is compared with an untreated control group to determine whether or not S17 induces drought resistance. The result shows that the experimental group treated with S17 exhibits improved drought resistance (FIG. 2B).

In addition, it was found that rice treated with S17 has an effect of improving osmotic stress resistance, unlike the control group, under the osmotic stress condition using mannitol (FIG. 3).

In another aspect, the present invention provides a method for improving resistance to drought and osmotic stress of plants using the composition for improving resistance to drought and osmotic stress.

The method for improving resistance to drought and osmotic stress may include treating a plant with the composition for improving resistance to drought and osmotic stress. In one embodiment, the treatment may be immersion or spraying. Immersion may be carried out by pouring the composition into the soil or a medium around the plant or immersing seeds of the plant in the composition.

The plant is selected from the group consisting of: food crops including rice, wheat, barley, corn, soybeans, potatoes, red beans, oats and sorghum; vegetable crops including *Arabidopsis thaliana,* Chinese cabbage, radish, pepper, strawberry, tomato, watermelon, cucumber, cabbage, melon, pumpkin, green onion, onion and carrot; specialty crops including ginseng, tobacco, cotton, sesame, sugar cane, sugar beet, perilla, peanut and rapeseed; fruits including apple, pear, jujube, peach, kiwi, grape, tangerine, persimmon, plum, apricot and banana; flowers including rose, gladiolus, gerbera, carnation, chrysanthemum, lily and tulip; and feed crops including ryegrass, red clover, orchardgrass, alfalfa, tall fescue and perennial ryegrass.

Hereinafter, the configurations and effects of the present invention will be described in more detail with reference to examples. These examples are provided only for illustration, and should not be construed as limiting the scope of the present invention.

### Example 1: Test for induction of response to environmental stress by compound S17

Rice protoplasts were transiently transformed with a pABRE-DRE::fLUC transporter, which induces the expression of the reporter gene, luciferase, in response to the plant environmental stress resistance hormone ABA (abscisic acid), and were then treated with 90 kinds of compounds having a structure similar to ABA received from the Korea Chemical Bank, and a compound that enhances the expression of the reporter was selected from the compounds and referred to as "S17".

In order to verify the effect of inducing response to environmental stress of the S17 compound compared with ABA, pABRE-DRE::fLUC and the transformation marker pUbi10::rLUC transporter were transiently expressed in rice protoplasts, and then treated with ABA and the S17 compound. After 15 hours, the degree of expression of fLUC was detected. The result showed that fLUC was significantly expressed in the experimental group treated with S17 (FIGS. 1A and 1B).

In addition, in order to investigate the signal transduction process activated by the S17 compound, the dephosphorylation enzyme, OsPP2C51 or OsPP2C68 gene, which inhibits ABA signaling, and reporter transporters (pABRE-DRE::fLUC, pUbi10::rLUC) were simultaneously transiently expressed in rice protoplasts and then treated with ABA and the S17 compound to identify the expression of the reporter. The result showed that the expression of fLUC was inhibited by OsPP2C51 or OsPP2C68 in the AB-treated group, whereas expression of fLUC was induced in the group treated with S17 (FIG. 1C).

Therefore, it was found that S17 has a mechanism different from induction of environmental stress gene expression by ABA signaling.

### Example 2: Effects of compound S17 on plant drought resistance

An experimental group, in which rice grown in a nutrient solution for 14 days was treated with S17, was compared with an untreated control group to determine whether or not S17 induces drought resistance. 3 days after treatment with S17, the nutrient solution fed to the experimental and control plants was removed to induce drought stress. The plants were allowed to be dried (for 12 to 24 hours) and water was fed again to the control and experimental groups, and the rate of the surviving plants was measured (FIGS. 2A and 2B). The result showed that the control group exhibited an average survival rate of 16.6%, and the experimental group (S17-treated group) exhibited an average survival rate of 76.7%, indicating that drought resistance increased (FIG. 2B). The dry weight of the experimental group was measured. The result showed that the weight of the S17-treated group was 91.5% of the average of the weight of the control group (FIG. 2C). This is considered to be due to the effect of inhibiting growth occurring during the treatment with S17.

In addition, the third leaves of rice of the experimental and control groups treated with ABA (5 µM) and S17 (various concentrations, 10 and 20 µM), respectively, for one day were cut, and the water loss rate was compared therebetween. Similar to the ABA-treated group, the S17-treated group exhibited a decreased water loss rate (FIG. 2D). The amount of water in a 50-ml tube that was used for 2 days by three Dongjin rice plants which had been grown for 14 days in a nutrient solution was measured. The control group used 19.9 g of water on average for 2 days, the group treated with ABA (5 µM) used 8.7 g of water, and the groups treated with 10 µM S17 and 20 µM S17 used 14.7 g and 12.5 g of water, respectively (FIG. 2E). The S17-treated group also had a decrease in the amount of water that was used, although the decrease was less than that of the ABA-treated group.

### Example 3: Effect of compound of Formula 1 on osmotic stress resistance of plant

As described above, it was found that S17 induces the expression of the gene responding to environmental stress, irrespective of ABA signaling using a rice protoplast system. Thus, the effects of S17 on osmotic stress were detected. Osmotic stress was induced using mannitol in 14-day-old rice after treatment with S17. The experimental group treated with 5 µM and 10 µM of S17 and the untreated control group were treated with 0 mM, 100 mM, and 200 mM of mannitol, and the growth of these plants was observed (FIG. 3A). The result showed that leaf curling caused by osmotic stress was significantly reduced.

In addition, in order to determine the osmotic stress resistance and growth-enhancing effect, osmotic stress was induced using mannitol in 14-day-old rice treated with S17. The experimental group treated with 5 µM and 10 µM of S17 and the untreated control group were treated with 0 mM, 100 mM, and 200 mM of mannitol, and then the water consumption of these plants and the dry weight after the experiment were measured (FIG. 3). The groups treated with 5 µM and 10 µM of S17 had water consumption rates of 97.5% and 78%, respectively, compared to the control group. As the concentration of mannitol increased, the amount of water used in plants decreased due to osmotic pressure stress. S17 exhibited a decrease in the amount of water that was used owing to the effect of slightly inhibiting the growth of plants as the concentration of S17 treated increased. However, in the case of treatment with 100 mM mannitol, when comparing the control group not treated with S17 with the group treated with 5 µM and 10 µM of S17, the amount of water used in the S17-treated group increased by 120% and 106%, respectively. In the case of treatment with 200 mM mannitol, when comparing the control group not treated with S17 with the groups treated with 5 µM and 10 µM of S17, the amount of water used in the groups treated with 5 µM and 10 µM of S17 increased by 119% and 128%, respectively (FIG. 3, B)

The result of measurement of the dry weight after the experiment showed behaviors similar to the change in the amount of water that was used. In the control group not treated with mannitol, as the concentration of S17 increased, the weight decreased by 97% (5 µM of S17) and 82% (10 µM of S17) compared to the group treated with 0 µM of S17, whereas, in the 100 mM mannitol-treated group, the weight increased by 101% (5 µM of S17) and 104% (10 µM of S17), and in the 200 mM mannitol-treated group, the weight increased by 106% (5 µM of S17) and 112% (10 µM of S17) (FIG. 3C), compared to the group treated with 0 µM of S17.

This result means that resistance to osmotic stress was improved by the treatment with S17.

It can be seen through the series of experiments that treatment with the S17 compound, like ABA, improves drought resistance and osmotic stress resistance of water-deficient rice seedlings.

## Claims

1. A composition for improving resistance to drought and osmotic stress comprising a compound represented by the following Formula 1 as an active ingredient:

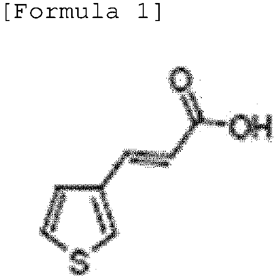

2. The composition according to claim 1, wherein a concentration of the compound represented by Formula 1 is 1 to 1000 µM.

3. A method for improving resistance to drought and osmotic stress, the method including treating a plant with the composition for improving resistance to drought and osmotic stress according to claim 1.

4. The method according to claim 3, wherein the plant is selected from: food crops including rice, wheat, barley, corn, soybeans, potatoes, red beans, oats and sorghum; vegetable crops including *Arabidopsis thaliana,* Chinese cabbage, radish, pepper, strawberry, tomato, watermelon, cucumber, cabbage, melon, pumpkin, green onion, onion and carrot; specialty crops including ginseng, tobacco, cotton, sesame, sugar cane, sugar beet, perilla, peanut and rapeseed; fruits including apple, pear, jujube, peach, kiwi, grape, tangerine, persimmon, plum, apricot and banana; flowers including rose, gladiolus, gerbera, carnation, chrysanthemum, lily and tulip; and feed crops including ryegrass, red clover, orchardgrass, alfalfa, tall fescue and perennial ryegrass.
